Europäisches Patentamt

European Patent Office

Office européen des brevets

(11) Publication number: **0 260 113**
A2

## (12) EUROPEAN PATENT APPLICATION

(21) Application number: 87307935.4

(22) Date of filing: 08.09.87

(51) Int. Cl.⁴: **G 01 S 15/14**
G 01 S 15/88, G 01 S 7/52,
G 05 D 1/04

(30) Priority: 08.09.86 AU 7908/86

(43) Date of publication of application:
16.03.88 Bulletin 88/11

(84) Designated Contracting States:
BE DE ES FR GB IT NL SE

(71) Applicant: **AGTRONICS PTY. LTD.**
Unit 5 Node 500 11 Brodie Hall Drive Technology Park
Bently Western Australia 6102 (AU)

(72) Inventor: **Mills, David John**
280 Surrey Road
Kewdale Western Australia, 6105 (AU)

**Keye, Martin Alfred**
12/57 Manning Road
Como Western Australia, 6125 (AU)

(74) Representative: Ben-Nathan, Laurence Albert et al
Urquhart-Dykes & Lord 91 Wimpole Street
London W1M 8AH (GB)

(54) Ultrasonic height control system.

(57) An ultrasonic height control system for an agricultural machine utilizes a transmitter/receiver transducer system (MUS, LL, L, CA, CB, R, RR) with signal processing in a microprocessor (P). The transmit-receive time elapse is used in further signal processing (including averaging of samples (Stage C)) to determine the measured height of the transducer above the soil. If the height is not correct then an error signal $E_{ar}$ can be used through automatic control (Fig 7 and 5 D.) to adjust hydraulics on the machine to reset the desired height. When a field is other than firm and level, a problem exists in monitoring the received relected signal ($R_x$) and analysing accurately the point in the signal trace which is representative of the true leading edge of the reflected signal because of background noise and varying degres of soil reflectivity. The envelope ($A_1$) of the amplitude of the received signal is monitored and first and second time values ($t_3$ and $t_6$) are recorded respectively when the amplitude envelope exceeds a threshold value and subsequently when the amplitude envelope falls below a threshold value. Computation is made of a reference time value ($t_{ref}$) falling between the recorded time values and this reference time value is used in the microprocessor (P) for providing an error signal (E) for machine adjustment purposes. Preferably, a delay controller (Fig 7) delays a machine adjustment for a time inversely proportional to the magnitude of the detected error and monitors for persistence of the error.

FIG. 6

**Description**

"ULTRASONIC HEIGHT CONTROL SYSTEM"

The invention relates to an ultrasonic signal processing arrangement applicable to agricultural equipment such as seeding equipment, cultivating equipment and harvesting equipment in which it is desired to maintain a working tool a set distance either above or below the soil surface as the case may be.

For many agricultural implements it is necessary to control accurately the vertical adjustment of the working height or depth of the implement in response to varying ground conditions. For example, the soil penetration depth of ground working tools and seeding equipment must be accurately maintained. Mechanical sensing devices have been used for gauging tool height or depth as the case may be and more recently ultrasonic remote height detecting systems have been proposed.

For example, ultrasonic devices for automatic depth control of seeders are described in a paper entitled, "AUTOMATIC DEPTH CONTROL FOR CULTIVATERS AND AIR SEEDERS" by Dyck et al presented to the Agri-Mation 1 Conference and Exposition February 1985. An ultrasonic height control system for sugarcane harvesters was the subject of a paper "MICROPROCESSOR-BASED ULTRASONIC HEIGHT CONTROLLER FOR SUGARCANE HARVESTERS" by Coad et al presented to the 1979 winter meeting of American Society of Agricultrual Engineers in New Orleans. That paper dealt particularly with a microprocessor arrangement for monitoring the position of the sugarcane cutter relative to the soil with monitoring of both stubble height and soil distance below the transducer. The present invention is based on the recognition that there is a problem to be dealt with in relation to the performance of agricultrual implements such as seeding machines which are affected by variations in soil conditions and types. Whereas ultrasonic height detection using known arrangements can be effective on firm level fields which are clear of growing material (or substantially so), problems arise in other conditions such as soft soil, rough soil, stony soil and soil containing growing stubble.

The present invention consists in an ultrasonic distance measuring apparatus for use on an agricultural machine, the apparatus comprising an ultrasonic transducer system for directing an ultrasonic signal onto the soil and for receiving a reflected signal, signal processing means for receiving an input signal corresponding to the reflected signal and for providing an output signal representative of the height of the transducer above the soil surface, the signal processing means comprising

(a) means for sampling the input signal;

(b) timing means for measuring the time elapsed from the initiation of the ultrasonic transmitted signal and the sampling of said sampling means;

(c) means for storing first and second elapsed time values when the amplitude envelope of the input signal respectively:

(i) exceeds a threshold value; and

(ii) falls below a threshold value;

(d) analysing means for analysing the stored elapsed time values and determining a deemed reference time value between said elapsed time values representative of the transit time of the ultrasonic signal from transmittal to receipt substantially irrespective of the amplitude and shape of the amplitude envelope, whereby variations in this reference time value indicate variations in the machine tool height; and

(e) output means for producing said output signal whereby adjustments required to the agricultural machine can be determined and/or effected.

In areas of agriculture such as seeding operations it is necessary to control the height of the machine to an accuracy of the order of 2 mm with the ultrasonic transducers about 600 mm above the surface of the soil. Substantial variations in the amplitude of the reflected signal occur with different soil types. If a seeding machine moves from hard, flat ground onto soft powdery ground, the implement wheels would tend to sink in thereby requiring the seeding heads to be lifted to avoid goind too deep. Use of the present invention rapidly and accurately determines such sinking and permits appropriate adjustment to be made, whereas by contrast with prior art arrangements relying on a detection of the received signal exceeding a threshold the opposite would be the case due to the poor reflectivity of soft powdery soils. As a consequence the seeding tools may actually be lowered rather than raised.

It will be appreciated that the use of the present invention does not rely upon the energy in the reflected signal being critical since the leading and trailing edges of the amplitude envelope of the signal are monitored in a digital sampling process, whereby an estimated peak value is calculated.

Preferably, the signal processing means is such that a deemed peak of the amplitude envelope is determined by the analysing means. Preferably, this is established as being a fixed proportion of the time along a time scale from the first elapsed time value to the second elapsed time value; it is only the portions of the amplitude envelope above the threshold level which will be detected and it is frequently found that the pulse has an assymetric shape. In practice it is therefore convenient to deem the peak to be e.g. one-third of the distance along the amplitude envelope.

Typically the ultrasonic transducer will be operated at about 40 kHz with a burst of about 20 cycles. The signal is generally scattered off a soil surface and typically the received pulse train will be detected over a longer period of time then the initial pulse train; some of the signal has longer path due perhaps to multiple reflections and radial errors. Indeed, after the amplitude peak has decayed below the detection threshold set in the apparatus, a further peak above the threshold (but perhaps of much lesser amplitude than the first peak) may be received e.g. due to stray ultrasonic reflections or due to a very short drop in signal amplitude. Therefore, preferably the signal processing means includes rejection means for rejecting any data relating to signals falling outside conveniently set limits, whereby spurious readings are eliminated. In practice the averaging of several samples will occur over a short period of time for the purpose of assessing any necessary machine adjustments and distortion of the average will be avoided by rejection of spurious values. For example, it would be known for particular equipment that the height of a transducer above the ground can only vary in the range of say 500 mm to 700 mm and therefore elapsed times for the first pulse equivalent to a path length corresponding to this range would be suitable limits.

According to a further inventive feature, there may be provided a signal processing arrangement which continues to sample and store the time values corresponding to the threshold crossings of both a first and second amplitude envelope peak, (or if desired more such peaks). The microprocessor is then arranged to examine the time length of the respective peaks and to reject any values falling outside the limits for valid data. For example, an extremely short first amplitude peak could be due to a totally spurious signal and would be rejected. Another possibility is that the second apparent peak above the threshold could in fact simply be an extension of the first peak wherein the amplitude of the envelope peak simply fell for a very short time below the set detection threshold; the microprocessor can be readily programmed to disregard such a short time dip in the amplitude of the reflected signal envelope and to effect the computation with the correct time values i.e. the first time value being at the beginning of the first peak, and the second time value being at the end of the second apparent peak.

The invention effectively deals with the problem of a different reflection characteristic occurring between firm flat soil structures on the one hand and soft powdery soil structures on the other. Soils of this latter group are notoriously poor in ultrasonic reflectivity and, since the amplitude of the signal will be low, there will be a delay in the amplitude envelope crossing the threshold value compared with the reflection from a hard flat soil structure. A corresponding phenomena occurs at the trailing edge of the amplitude envelope with the soft soil pulse falling below the threshold at an earlier point in time. Therefore, the invention can avoid prior art inaccuracies which arise due to the simplistic prior art approach of monitoring the received pulse envelope and deeming the ultrasonic pulse transit time to correspond with the time at which the envelope first crosses a defined threshold level.

Preferably, an amplifier arrangement is provided for amplifying the relatively low amplitude of the signal reflected from the soil structure. However, embodiments of the present invention operate effectively with signal clipping which restricts the amplitude of the signal supplied to the signal processor. This arrangement permits a common level of amplification to be effective for various soil types including highly reflective soils. For hard, flat soils the sampled amplitude envelope would have a "flat top" and therefore computation of the deemed peak by using the invention is effective since any attempt to detect the actual peak would be inoperative due to the signal clipping.

In a typical installation of the present invention a seeding machine having a width in the range 10 to 15 metres may be used with a series of sensors at spaced locations across the machine. In a machine having three sections, the centre section has a rigid frame or linkage which usually keeps the centre section parallel to the ground and a sensor is mounted towards each side of the central section. Respective wing sections are hingably interconnected to the centre section and usually have a sensor near the out-board side of each wing. The invention is preferably implemented in a manner in which averaging of reading occurs. However, simple averaging would not deal with an additional problem which is preferably solved with embodiments of the present invention. The problem is a constant difference between respective sensors. For example, if a fault developed such as a tyre going flat on one of the wings of a trailed seeding machine, then that wing would be causing the average height measurement to be less than it should be; accordingly the seeding tools would be lifted. Therefore, preferably the apparatus includes means for comparing respective sensors and for giving an alarm signal if any sensor departs more then a predetermined amount from the average reading for a sufficient lengthy time, e.g. 3 minutes. A relatively long averaging time is desirable since for a short period of time it is feasible for one wheel of the wing of a machine to run in a rut or to run on a ridge.

If it is desirable to set up the machine to have a planting accuracy of plus or minus about 7 mm i.e. no actuation of the hydraulic adjustment taking place if the measured depth is within about 7 mm of the designed depth, then it has been found convenient for a multi-wing machine to provide for a warning after three minutes but only if the average reading on one of the wings departs more than 30 mm from the desired value.

In the case of a three wing machine, two alarms such as warning lights are all that are needed. If one alarm comes on, then that indicates that the left section is out of adjustment; if the other comes on it indicates that the right wing section is out of adjustment, but if both lights are on it indicates the centre section is out of adjustment.

Incorrect adjustment in a machine can occur over a period of running time due to slow leakage of hydraulic fluid past the pistons in a series hydraulic ram arrangement (which is commonly used for controlling seeding apparatus and the like). Therefore, use of the arrangement described in the previous paragraph can give the operator a warning whereby resetting of the hydraulic rams can be effected in a conventional manner. It is desirable to incorporate a motion detector which only "enables" the above-described level alarm arrangement when the machine is in motion.

In a preferred embodiment, a simple arrangement is provided to facilitiate calibration of each of the transducers in the system. Preferably the apparatus includes a switch which when closed switches on a calibration mode of the apparatus; for this mode the driver of the tractor manually adjusts the implement tools to skim the surface of the ground as the tractor is driven forwardly a short distance. A large number of samples are taken for each transducer and stored and the average of the stored values are deemed to be the reference calibration values for each transducer.

In the interest of providing a single processing apparatus suitable for installation with a variable number of transducers e.g. up to a maximum of 6, the apparatus preferably includes means for detecting a lack of any response signals in a channel of the processor corresponding to any one of the 6 transducer ports, and then for normal operation involving a multiplexing process, the port in question is disregarded and not utilized. Thus the machine determines whether e.g. 2, 4 or 6 transducers are being utilized and in normal operation only scans the ports attached to operating transducers.

It is also desirable that the automatic control of the hydraulic circuits only operates when the machine is in motion. When the machine is stationary, operators could be in a dangerous position. An advantageous embodiment of the invention incorporates a motion detection arrangement which relies on detecting fluctuations in the ultrasonic received signals which are above a certain value when the machine is in motion; the apparatus responds so that automatic actuation of the hydraulic control system is only enabled when the machine is in motion.

A further and separate inventive feature which may be used separately or in combination with the above-described inventive arrangements is an ultrasonic distance measuring apparatus for use on an agricultrual machine, the apparatus comprising:

(i) an ultrasonic transducer system for directing an ultrasonic signal onto the soil and for receiving a reflected signal;

(ii) signal processing means for receiving an input signal corresponding to the reflected signal and for providing an output signal representative of the height of the transducer above the soil surface;

(iii) means for providing a sample averaged error signal from a number of readings in a sample representative of the averaged difference between the actual transducer height above the soil and the desired height, said error signal also being representative of the departure of a working tool on the agricultrual machine from a desired height relative to the soil surface;

(iv) signal control means for monitoring the change of the sample averaged error signal with time and for providing a controlled actuation signal for actuating a control system to adjust as required the agricultrual machine to alter the height above the soil of the portion of the machine mounting the transducer;

(v) the signal control means comprising a plurality of electronic counter means corresponding to error signal ranges having respective threshold values and arranged to count time to respective termination points after being switched on;

(vi) each counter means for an error range which has a larger threshold than the next counter means in the series having a shorter termination point than the termination point of said next counter means;

(vii) each of the counter means being controlled for being:

(a) switched on when the sample averaged error signal at any sampling time is in the range to which that counter means corresponds and to count time to said termination point;

(b) reset if the control system for the agricultural machine is actuated; and

(c) a trigger for an actuation signal if the counter means reaches its termination point; and

(viii) the apparatus having means for processing said actuation signal from any of the counter means for providing said control actuation system for the control system of the agricultural machine, said control actuation signal corresponding to the magnitude of the error signal

Although this inventive feature could be implemented with specific ranges with respective upper limits (either with overlapping or non-overlapping ranges), the arrangement can be simply and effectively provided where each range has no fixed upper limit.

Preferably, the arrangement of the previous paragraph is implemented by providing means associated with each of the counter means for responding to the value of the sample averaged error signal at each sampling point in time and for determining an average value thereof at the termination point for that counter means, whereby the controlled actuation signal has a corresponding value. Thus, after a counter means has been switched on, it continues to count towards its termination point even if individual sample averaged error signals fall outside the range for switch-on of that counter means. If the particular counter means which has been switched on experiences a value above the threshold for the next higher counter means, then this next higher counter means, is then switched on and if it reaches its termination point before the first counter means then it is the next higher counter means which cuases the production of the requisite controlled actuation signal and all counter means are reset.

Most preferably, a threshold gate is applied to the control actuation signal of the respective counter means for causing a machine adjustment signal to be issued if the averaged value of the samples exceeds the threshold for that counter means, but otherwise to cause resetting of that counter means only.

In a practical embodiment each sample averaged error signal is established by averaging the values determined by all operating ultrasonic transducers on the machine; for example, this can be an average of 24 readings distributed among operating transducers which are averaged every 200 msec.

The significance of this inventive feature is that machine stability and unnecessary wear and tear on the adjustment mechanism of the agricultural machine is avoided. Stability of operations is achieved since, for small error ranges, the error must persist typically for several seconds before any machine adjustment is made. In the event that a relatively large error is detected, then the relevant counter means reaches its termination point more quickly and causes a corrective actuation signal to be issued e.g. after a fraction of second.

This aspect of the invention is especially important when the machine has a hydraulic control system and the actuation signal causes the operation of solenoid control valves.

In a practical device, a programmed microprocessor is used with either internal or associated electronic counter devices, the microprocessor maintaining a processed error signal (which can be used for display purposes) but which is only supplied to the solenoid valves when the error signal exceeds a small deadband region and the error persists for sufficient length of time. The control signal to the solenoid is a pulse having a duration dependent upon the magnitude of the average error value and takes account of the operating characteristics of the hydraulics so that correction to the desired value is substantially achieved with a single control pulse.

For agricultural machines such as seeding machines and soil working equipment it is considered that a very practical operating system is one having the following characteristics:

Dead Band

Any sample averaged error signals in range of plus or minus about 0.74 cm do not cause any control actuation signal to be issued. Furthermore, as described below, if the average of a series of readings associated with any specific counter/sampler is no more than 0.74 cm, then no control actuation signal is produced.

Immediate Mode Corrections

An immediate mode response operates to correct the machine if the magnitude of a sample averaged error signal is 4.0 cm or greater. If this occurs, any of the four immediately reset. Resetting clears all stored values for each counter/sampler and switches it off. The error signal is applied to raise or lower the machine depending upon whether the error signal is positive or negative.

Delay Mode Counter/Sampler Ranges

Four counters are used with respective thresholds and termination times before actuation signals are permitted as follows:

| Counter Sampler | Error Thresholds | Persistence Time |
|---|---|---|
| P | 0.75 cm | 3.2 secs |
| Q | 1.25 cm | 1.6 secs |
| R | 1.75 cm | 0.8 secs |
| S | 2.75 cm | 0.4 secs |

The control to the counters is such that the sample averaged error signal is responded to by each counter at frequent intervals e.g. every 200 msec. A counter is switched on when the absolute value i.e. magnitude of a particular sampled averaged error signal exceeds the threshold for the range corresponding to that counter. For example, counter P will be switched on if an error of e.g. 1 cm arises. If subsequently during the counting process the value of 0.7 cm is found then this value is utilised for the purpose of determining the average of the sampled values when the counter reaches its termination point. During the counting of counter P, if a higher value e.g. 1.5 cm arises then this is also utilized for use by counter P, and if counter P is not reset (by virtue of a higher order counter reaching its termination point) but reaches its termination point 3.2 secs after being switched on, then the average of all the utilized sample averaged error signal values is determined taking into account any positive and negative values. This average is used to cause the actuation signal to be initiated as either a "raise" or a "lower" command with a magnitude corresponding to said average, providing that the absolute value i.e. magnitude of said average exceeds the threshold for the counter.

However, where such a higher value of e.g. 1.5 cm is experienced, at that point in time counter Q will be turned on and if counter Q reaches the end of its 1.6 secs counting before counter P reaches the end of its count time, then counter Q dominates and provides the requisite controlled actuation signal subject to the absolute value of said average exceeding its threshold, and all counters are reset.

If any counter reaches its termination point and the absolute value of said average does not reach the threshold, then that counter alone is reset.

If two or more counters simultaneously reach their termination points, then the higher or highest threshold counter dominates.

The above described arrangement for the control actuation signal can provide an effective automatic control response to varying conditions in agricultural operations. The arrangement deals effectively with the problem of avoiding any excess wear and tear on a hydraulic system yet providing a very rapid response where a sudden substantial error is occurring. On a typical agricultural machine having a fast hydraulic response time it may be possible to effect a vertical adjustment of up to 4 cm in 200 msec and therefore sophisticated control is highly desirable.

The length of time needed to adjust different hydraulic systems will vary. For a relatively slow system requiring a large correction, time of the order of 1 sec or more may be needed. Therefore, a further preferred feature which is incorporated into the apparatus is an arrangement to maintain all the counter means switched off during corrective hydraulic adjustment. On completion of a hydraulic adjustment the system reverts to normal monitoring functions. Preferably, the system monitors the sample averaged error signals during hydraulic movements, and if any such signal indicates an error of the opposite sense to that which caused the hydraulic movement to be initiated, then the hydraulic movement is immediately prematurely terminated. Normal monitoring functions re-commence.

BRIEF DESCRIPTION OF THE DRAWINGS

Figure 1 is a diagram illustrating the transmitted and received ultrasonic signals at an ultrasonic transducer;

Figure 2 is a diagram illustrating truncation of a high amplitude received signal;

Figure 3 is a central section in side elevation of an antenna for use with an ultrasonic transducer and adapted to be mounted on an agricultural implement;

Figure 4 is a schematic plan view illustrating an agricultural seeding apparatus fitted with a multiplicity of transducers and connected to a signal processing apparatus embodying the invention;

Figure 5 is a circuit diagram of a signal processing apparatus for use in the arrangement of Figures 3 and 4.

Figure 6 is a logic diagram illustrating the principles utilized in the controlling software of the microprocessor of Figure 5; and

Figure 7 is a schematic diagram of a separate optional additional software-implemented control function using electronic counters for further modifying the control signals to hydraulic adjustment equipment of the agricultural machine.

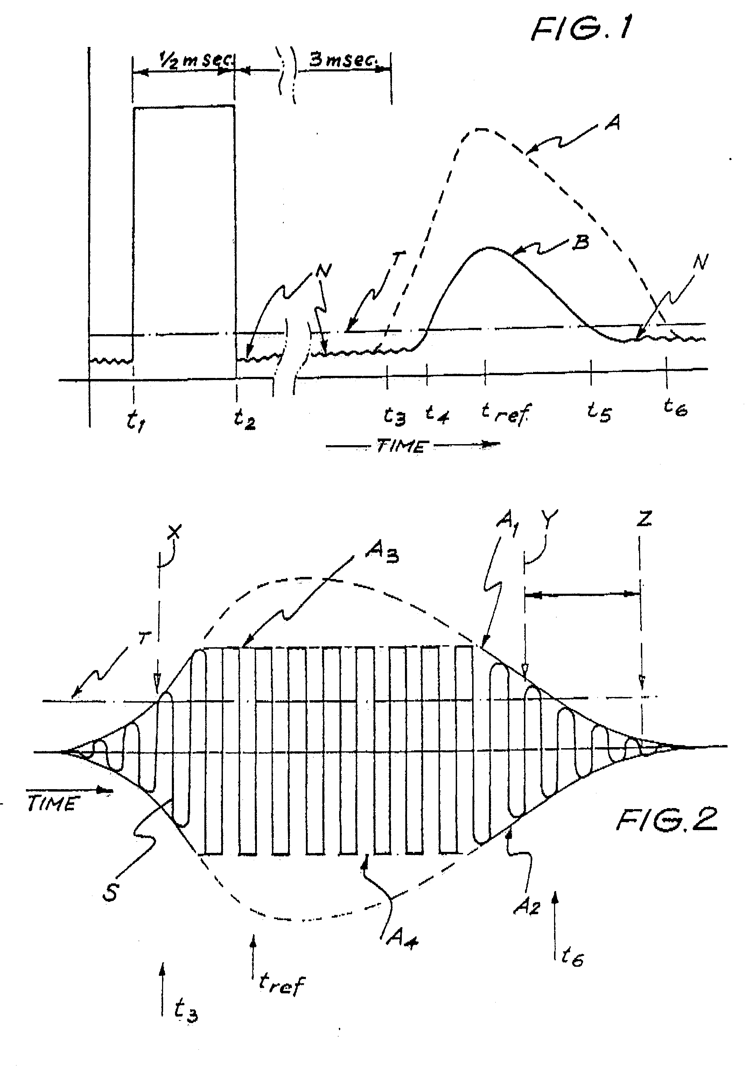

Referring first to Figure 1, the diagram illustrates amplified received signal amplitude envelopes against time. As shown in the diagram an ultransonic pulse train is emitted by an ultrasonic sensor (comprising a transducer and suitable antenna) from time $t_1$ to $t_2$, this time interval thpically being $1/2$ msec and would comprise about 20 cycles at 40 kHz. With the sensor located about 600 mm above a soil surface a response time in the range of 3 msec to 4 msec would occur before any reflected signal could arrive. Therefore, the apparatus preferably includes a program in a microprocessor for rejecting any signal returned in less then 2.4 msec from time $t_1$.

Figure 1 shows in dotted lines an amplitude envelope response curve A from hard flat ground and it will be seen a large amplitude signal is obtained whereas in full lines the response curve B from soft powdery ground is indicated. Superimposed on this signal is a background threshold noise indicated by a line N and the apparatus is set so as only to sample and monitor the received signal above a threshold T. It will be seen that curve A for hard ground rises above the threshold at time $t_3$ and does not drop down below the threshold until time $t_6$. Intermediate these times are the upward and downward cutting points $t_4$ and $t_5$ for the soft ground curve B. This if conventional techniques were used and the cutting of the threshold upwardly by the leading edge of the pulse were used as the time for determining tool height, then with soft ground for no change in actual tool height due to the lower ultrasonic soil reflectivity the apparatus would perceive a longer transit time for the pulse and thus calculate that the height of the transducer above the soil is greater than in fact it is. As a consequence the tools would be lowered below the desired value when in fact no change may be required.

The situation gets worse if the wheels of the implements sink into the ground at the same time as adjustment in the wrong direction is taking place.

The invention is implemented by sampling and storing the time values at times $t_4$ and $t_5$ (for soft ground).

It has been found effective in practice to calculate the deemed peak between either $t_3$ and $t_6$ or $t_4$ and $t_5$ as being one-third of the distance between the pair of the time values. Thus the algorithm is

$$t_{ref} = \frac{(t_5 - t_4)}{3} + t_4$$

when the time counter is started at $t_1$.

Referring now to Figure 2, the results of electronic truncation of the stored value of the monitored signal is shown. Figure 2 illustrates the actual received signal S at the sensor for hard ground and shows the full positive and negative values of the signal; superimposed on the signal are the (imaginary) positive and negative amplitude envelopes $A_1$ and $A_2$ which are clipped to provide flat portions $A_3$ and $A_4$ in the peak region. The drawing shows in dotted lines the values for the amplitude envelope had there been no clipping. By contrast Figure 1 shows purely the envelope of the signal amplitudes in the positive sense.

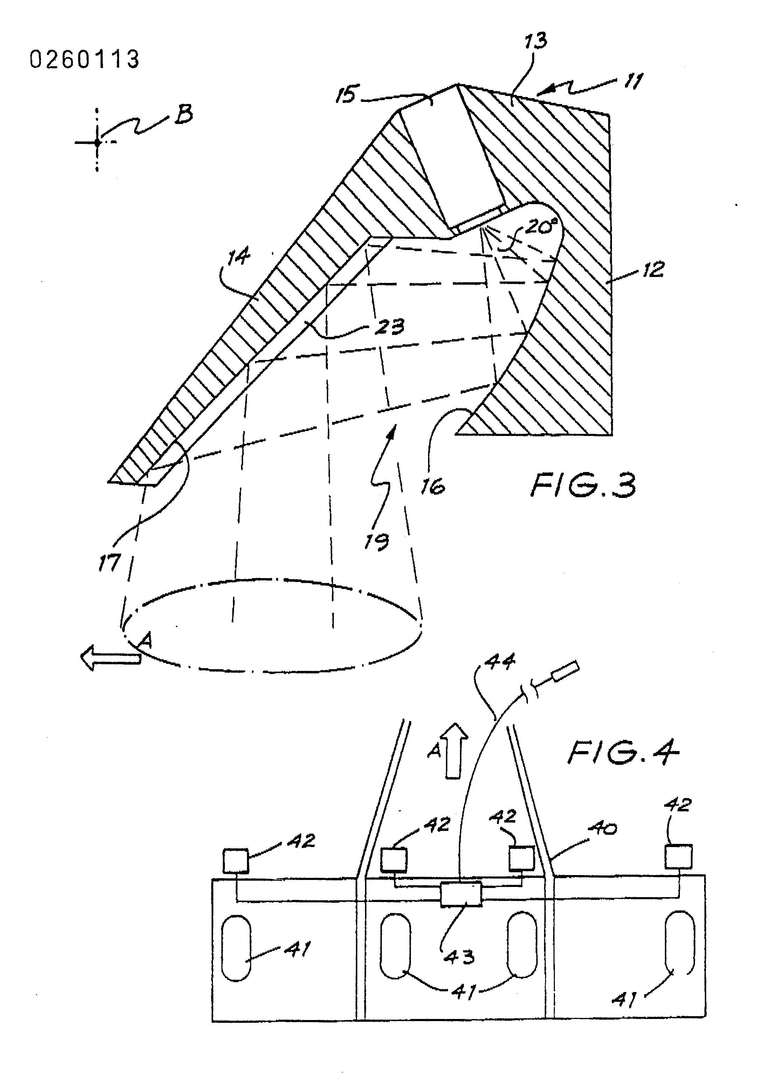

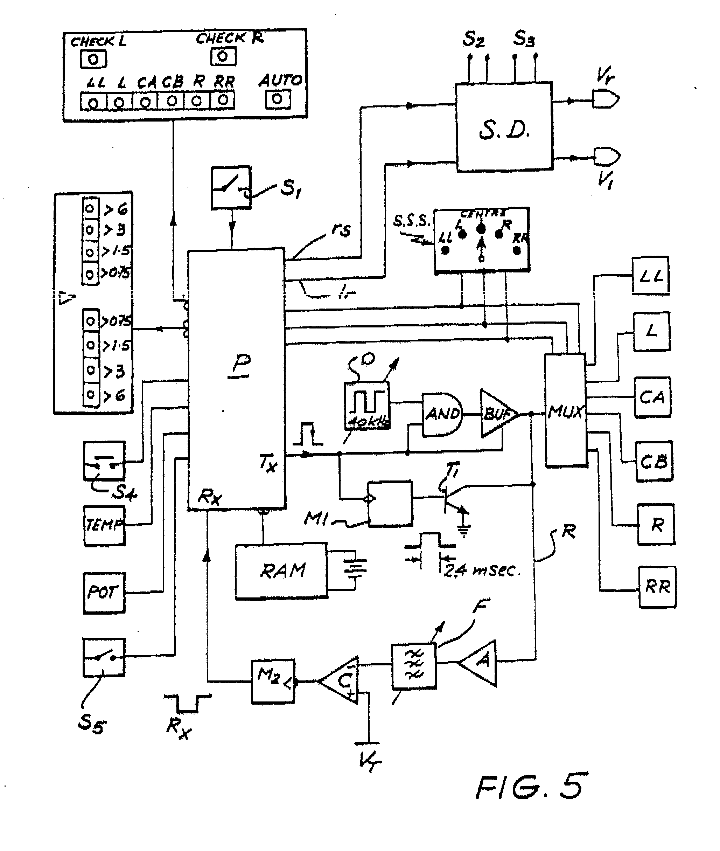

The signal processing arrangements described above with reference to Figures 1 and 2 are implemented in electronic circuitry described below with reference to Figure 5 which is coupled to a series of sensor units mounted on an agricultural machine as shown in Figure 4. With the arrangement shown in Figure 4, a multiplicity of sensors are utilized. In this arrangement four sensors are utilized on a three wing machine and the sensors are coupled to a single driving apparatus mounted in the tractor cab. This incorporates the circuit shown in Figure 5 but the unit has six ports so it can be coupled to as many as six sensors.

Referring now to Figure 4, the illustrated machine is a trailing implement having four ground wheels 41, a central frame 40 and left and right wing sections hingably connected to the centre section. Hydraulic rams (not shown) are provided in a conventional manner for adjusting the tools on the implement to a chosen height relative to the machine frame.

The agricultrual machine utilizes a series of four sensors 42 each comprising a transducer and an antenna and mounted at the front of the machine. The antennas 11 (shown in detail in Figure 3) are each of generally inverted U-shape arranged so that a transducer is mounted in a bore 15 in the head 13 of the antenna and directs the ultrasonic signal onto a first rearward leg 12 of the U-shape, which has a part-cylindrical surface 16 extending around a horizontal axis B. The ultrasonic signal is then reflected onto a second reflector 17 on the interior surface of the front leg of the U-shape, this reflector also being part-cylindrical but extending about an axis which is in a vertical plane at right angles to the axis of the first relector with the axis of the second reflector inclined at about 45° to the perpendicular. The signal transmitted downwardly through the opening 19 is of elongated elliptical shape and slightly divergent. The antennas have their respective front legs 14 directed forwardly of the machine and it is important that the sensors are not following wheel marks generated by a wheel of a tractor or the machine.

Cabling extends from each sensor to a junction box 43 from which a cable 44 leads to a micro-processing unit mounted on the tractor. The driver of the tractor sets the desired depth for the implement and this is automatically maintained by the micro-processor.

Initial calibration is provided with the working tools skimming the ground as the tractor is driven. It has been found that an averaging time of about 10 seconds is all that is needed. Since the value $t_{ref}$ is computed and stored for each sensor this represents at the ambient temperature in question the zero reference height and for normal operation the operator simply alters a dial to indicate the depth of tool required. To compensate for variations in ambient temperature, temperature measurements are periodically made e.g. every 3 mins, and the zero reference heights for the respective sensors are adjusted.

The current adjusted zero height value is subtracted from the measured sensor height value to produce a departure value. The departure values are averaged across all the sensors and the average departure value is used to control the operating hydraulics of the equipment taking into account the operator selected tool depth. An error signal is generated being the average departure value minus the operated selected tool depth.

In practice it has been found desirable to limit adjustment of the hydraulics to cases where the absolute value of the error signal indicates a departure from desired depth by more than a predetermined amount e.g. more than about 7 mm absolute error. Thus, the system has a "deadband".

The block diagram of Figure 5 shows a system adapted to connect to and operate with up to 6 ultrasonic sensors which are connected to respective ports of an analogue multiplexer MUX which connects to a programmed microprocessor P which controls the circuit and provides the desired output. The multiplexer MUX has its ports CA and CB for sensors to be on a centre section on a multi wing machine, the ports L and R for respective left and right wing sections and, particularly for a five wing machine, further ports LL and RR for outer left and right wings.

The microprocessor P can conveniently be a Motorola brand 68705 R3 microprocessor which is programable to control operations in accordance with the arrangements described herein. The microprocessor has a transmit control line $T_x$ arranged to produce a square pulse of length 0.5 msec which is fed to an AND gate which turns on a buffer amplifier BUF so that a pulse train from a 40 kHz tunable oscillater O is applied, to the multiplexer MUX for transmittance by the sensor connected at that point in time to the active port. Typically about 3 msec later, a reflected signal is received at that sensor and passed to the microprocessor along line R.

About every 8 msec a further ultrasonic pulse train is supplied to the multiplexer MUX which switches over sucessively to each operative port to establish in sequence height readings from the sensors attached to the ports.

Once a sensor is activated by an ultrasonic transmit signal, it is necessary to stop the sensor "ringing" so that it is ready to receive a reflected pulse train. This is achieved by supplying the 0.5 msec square pulse on line $T_x$ also to a negatively-triggered blanking monostable M1 which, when the negative edge of the 0.5 msec pulse is received, causes a signal to be sent to a shorting transistor $T_1$ to clamp the sensor against ringing. The monostable M1 provides an output pulse of 2.4 msec duration and thus the signal from the shorting transistor T1 is terminated before any valid expected reflected signal arrives. This step also eliminates any spurious received signal being detected should any signal arrive from some other source.

The received signal on line R is passed through an amplifier A to a tunable 40 kHz band pass filter F to provide the filtered ultrasonic received signal to the inverting input of a comparator C, the non-inverting input of which is connected to a voltage source which represents a threshold voltage. The output of the comparator C represents the filtered received ultrasonic signal in its portion only which exceeds the desired threshold value and this is applied to a negatively-triggered, retriggerable monostable $M_2$ having a period of 0.07 msec, a

7

# 0 260 113

period of time equivalent to about three cycles of the ultrasonic received signal. Monostable $M_2$ is triggered by the first rising ultrasonic signal trace to cut the threshold; this is shown by line X in Figure 2 and while the monostable M1 remains triggered a square output signal $R_x$ is produced. The monostable M2 times out and terminates the output square pulse signal $R_x$ 0.07 msec after the last positive crossing of the ultrasonic signal as indicated by line Y in Figure 2, since it is retriggered to remain on for every previous positive crossing (which occurs about every 0.025 msec). Therefore, the signal $R_x$ is terminated in the region of line Z, but as this is a constant delay for all received signals, no error is introduced because this is taken into account in initial calibration of the system.

Thus, the microprocessor P receives an input signal $R_x$ in the form of a rectangular pulse of length dependent on the time for which the envelope of the amplitude of the received signal exceeds a predetermined threshold value.

In practice it is convenient for the threshold value to be the same for both ends of the singal but in principle it would be possible with more devices to have different thesholds but this is considered to be unnecessary.

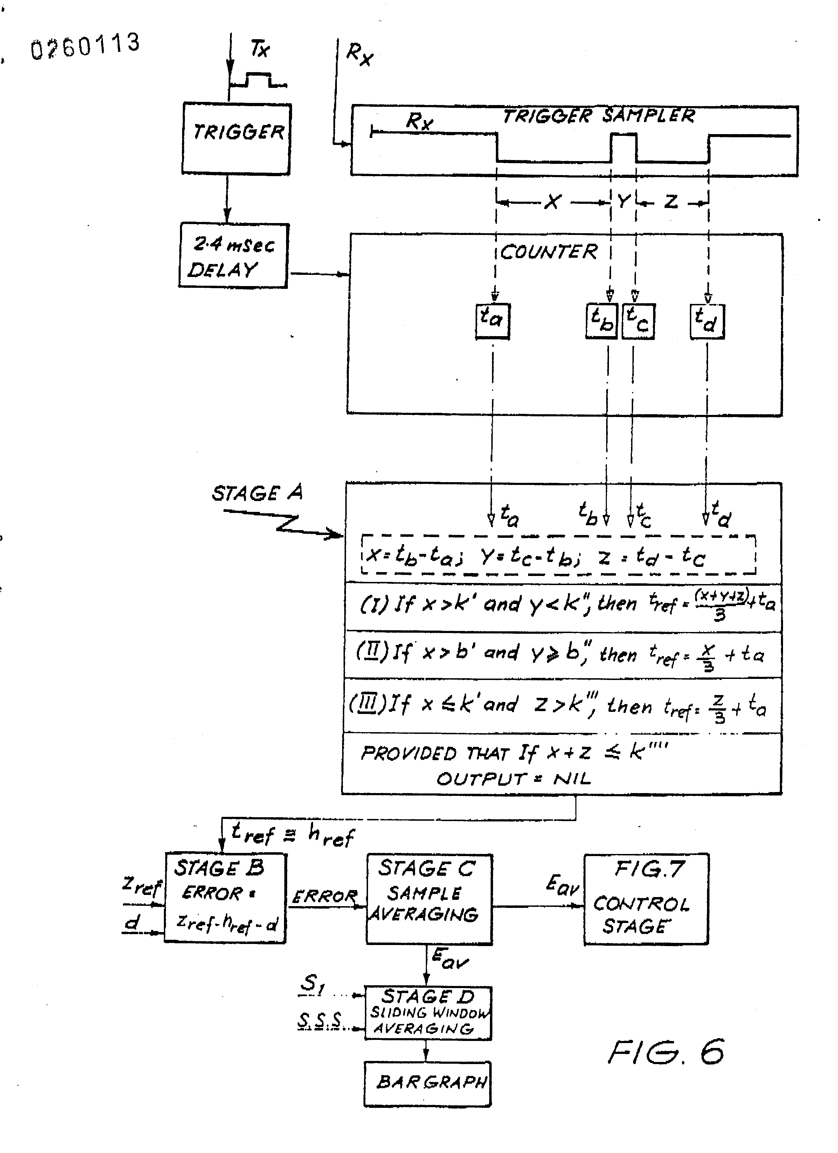

The microprocessor P includes a clock and a readable digital counter which counts time in accordance with a stored program as generally illustrated in Figure 6 for a preferred embodiment. However, the general principles used will first be described. The counter is arranged to start counting time when the transmit pulse $T_x$ is initiated by the microprocessor, and to be read when a pulse edge is encountered. The read values are stored and are used in determining the deemed reference or time $t_{ref}$. The algorithm stated above is applied to determine a reference time count which would represent the peak of the received signal. Computation steps are then performed.

A temperature sensor TEMP is connected to a port of the microprocessor. A digital signal representative of temperature is monitored regularly and compared with the stored temperature value at which calibration of the system was conducted and, as may be necessary, the microprocessor adjusts the digital values of the zero reference or calibration values corresponding to each sensor and which are stored in the RAM. This adjustment is necessary to compensate for differences in ultrasound velocity for different temperatures.

The height signal for a sensor is compared with the temperature compensated zero reference value for that sensor and a difference signal generated. After taking a convenient number of readings from the operating sensors e.g. 24 readings over 200 msec, an average difference value i.e. sample averaged difference value is computed.

The tractor driver has a dial for indicating the desired working depth. This is connected to a potentiometer POT which gives a voltage signal to a port of the microprocessor and this generates a signal within the microprocessor representative of desired depth. The microprocessor compares this value against the sample averaged difference value and produces a sample averaged error signal. The sample averaged error signal is analysed with reference to predetermined ranges and a visible depth bargraph is illuminated as necessary to indicate to the tractor driver the extent of the error (if it is greater than 7.5 mm). The bargraph has a series of 4 LEDs (light emitting diodes) for indicating shallowness of depth and similar series for indicating excessive depth respectively by amounts being greater than 7.5 mm, 1.5 cm, 3 cm and 6 cm. If manual control of machine hydraulics is selected, the microprocessor maintains a "sliding window" average (e.g. over 8 readings) to produce an output error signal which is used at the bargraph.

For automatic control purposes, the microprocessor P automatically actuates a hydraulic control system if the error equals or exceeds a predetermined value conveniently about 0.75 cm. If the implement is to be raised, a signal is applied to output line rs and if the implement is to lowered, the signal is applied to line 1r. The signals are respectively fed to a solenoid driver unit S.D. which provides a suitable actuation signal to raise and lower solenoid operated hydraulic valves $V_r$ and $V_1$.

The output for the solenoid driver S.D. is a pulse of sufficient duration to adjust the machine so that the correction in depth substantially occurs. Since individual machines and tractors have different hydraulic characteristics and response times, in accordance with a further inventive feature, the response characteristics are determined and stored in arandom access memory RAM; this data is accessed by the microprocessor to determine the length of the control pulse needed to achieve the desired amount of correction for a given detected error. The RAM also stores calibration factors including the information as to the temperature at which calibration occurred. This information is retained between calibrations and for this purpose a back-up electrical battery is provided.

Manual over-ride is possible at the operators choice. Closure of a manual select switch $S_1$ inhibits the microprocessor sending any signals to the solenoid driver S.D. and a 3 sec moving average of error values is simply displayed on the bargraph. Furthermore, the solenoid driver S.D. has manual over-ride raise and lower switches $S_2$ and $S_3$.

For the purpose of initial calibration, an operator actuated switch $S_4$ connects to the microprocessor and the software operates such that actuation of this switch erases from the RAM pre-existing values and causes the microprocessor, through its control program, to go into a calibration process. The calibration process is conducted by the driver manually controlling the hydraulics to position all the machine tools so as to skim the ground and then the tractor is driven over the ground. The ambient temperature value is digitally recorded and stored and the reference time values for each sensor recorded also.

It may be that one or more sensor are inoperative or alternatively one or more ports may have no sensor connected. During this process any such absence of results will cause the microprocessor to alter control to the multiplexer MUX for subsequent normal operations to ignore such non-conected ports in accordance with normal 2, 4 or 6 sensor configurations.

The preferred embodiment also includes a status indicator light panel for further supplying information to the operator. During the initial calibration, should no signals corresponding to one of the sensor ports be detected, then the corresponding LED is flashed on the display unless a standard 2, 4 or 6 sensor configuration is matched. For subsequent normal operations these LEDs are illuminated providing the corresponding sensor is operative. However, a sensor which is operative during initial calibration will have its corresponding LED flashed if it becomes inoperative during normal operations.

In normal use the microprocessor stores average values for each sensor over a period of about 3 minutes. If any individual outer sensor (LL,L,R, and/or RR) has an averaged reading indicating an absolute value of depth difference greater than 3 cm compared with the averaged readings of the centre section sensors (CA and CB), then the corresponding LED(s) on the status indicator panel (CHECK L and/or CHECK R) is flashed and the driver can take any necessary corrective action.

A further feature provided is a selector switch S5. Normally the microprocessor presumes that the tractor will travel at a relatively high ground speed e.g. 10 Km/hr so that a typical corrective response for an error 1.5 cm will occur after about 1.6 secs. However, if a very slow ground speed is selected e.g., 3 km/hr then the operator can close switch S5 to alter the sampling in the microprocessor whereby effectively sampling periods are doubled and corrective responses take twice as long.

The circuity includes also a 5 position B.C.D. encoding selector switch SSS which in a normal (centre) position causes the microprocessor P to operate the bargraph as described above i.e. error from desired tool depth is displayed. The switch can be manually actuated to one of 4 further positions to control the microprocessor P to cause display at the bargraph of the 3 min averaged difference between one of the sensors LL, L, R, R or RR and the centre sensors CA and CB.

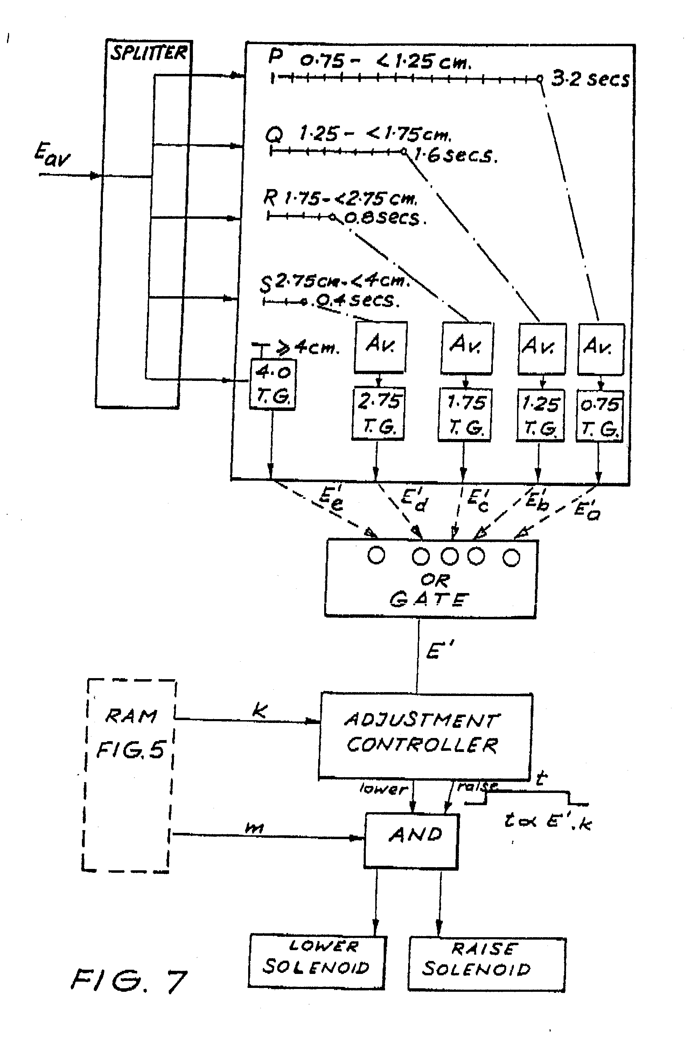

A sample averaged error signal $E_{av}$ is determined in the microprocessor P of Figure 5, this being an average across all the sensors and averaged over a short period of time e.g. 0.2 secs. The value of $E_{av}$ is further averaged by an 8 point sliding window technique and therefore is gradually updated very frequently i.e. 5 times per second. This sliding window average is displayed on the bargraph when switch SSS is in the centre position and switch $S_1$ is selected for manual operation. However, for automatic control, the more sophisticated approach described below is preferred (see Figure 7), and the bargraph displays the results of this alternative monitoring and control.

Reference will now be made to Figure 6 which conceptually illustrates signal processing in the microprocessor. The microprocessor produces at regular intervals its transmit initiation pulse $T_x$ which, through monostable M1, effects a trigger and delay function. A corresponding delay as shown in Figure 6 occurs within the microprocessor which effects a trigger and delay routine, and then starts counter A.

The received signal $R_x$ is sampled under the control of the counter at a high rate and in the embodiment illustrated a double peak signal (from monostable M2 in Figure 5) is monitored by the microprocessor; as illustrated in Figure 6, the microprocessor has a TRIGGER SAMPLER function and in the illustrated embodiment the first four leading and trailing edges of the signal pulses detected by the sampler respectively cause the counter value to be read and stored as time values $t_a$, $t_b$, $t_c$ and $t_d$. These values are fed into computer A contained with the microprocessor. The time periods X, Y and Z between the adjacent pulse edges are computed and logic tests applied with respect to stored constant values to determine the calculated value of $t_{ref}$.

One example of useful software control will be given, but other arrangements are equally possible.

The computer does not produce any output signal capable of causing a machine adjustment unless the length of the pulses (X + Z) is greater than a constant value K''''. This supresses any unreliable signals; for example K'''' could conveniently be set to correspond with receipt of the equivalent of at least ten cycles of signal i.e. 0.25 msec.

As illustrated in Figure 6, the logic in the software loaded into computation Stage A computes the value of $T_{ref}$ by examining the value of X and then other values. The conditions are as follows:

(I) If X is greater than a constant value K' e.g. 0.1 msec, and if Y is less than a second constant K'' e.g. 0.05 msec, then the reference time takes account of the full signal band (X + Y + Z).

(II) If X is greater than k' and Y greater or equal to k'', then since the gap Y between the peaks is relatively long the second peak is best deemed to be a spurious signal, (perhaps due to a multiple reflection off a machine part) and it ignored so that the reference time is computed with reference only to time band X.

(III) If X is less than or equal to k', then it is assumed that X represents a spurious signal and is ignored, and providing Z is in excess of a predetermined value K''', i.e. the second peak is long enough to be a valid signal, $t_{ref}$ is computed with reference to Z.

The output from computation stage A comprises a value for $t_{ref}$ for each ultrasonic signal transmitted which corresponds to a height $h_{ref}$. The output signal is supplied to computation stage B where the current temperature compensated zero or reference value $z_{ref}$ for the relevant sensor is read and a value representative of the tool depth is computed. This is in turn compared with the operator input desired depth d, whereby a value representative of the measured error is produced; error = $z_{ref}$ - $h_{ref}$ - d.

The measured error is subject to averaging across a sample of e.g. 24 readings distributed across the operating sensors in averaging stage C, the output of which is fed to:

(a) a sliding window averaging stage D, and, if manual mode is selected and switch SSS is at the centre position (Figure 5), to a bargraph display; and

(b) to an automatic control stage shown in Figure 7 which is a preferred system; however if desired the output from stage D would be used for automatic control.

In the stages of Figure 7 computation is made of the length of the control pulse for line $r_s$ (if a raise signal is required) or line $1_r$ (if a lower signal is required). The microprocessor, reads from its memory a control factor "k" representative of the response characteristics of the hydraulic adjustment devices and then causes the correct output to be provided, although the output is totally suppressed if output stage AND gates are not fed with an enable signal "m" representative of a level of variance in the signal received by the sensors and indicative of motion of the machine.

Input to Figure 7 is the sample averaged error signal "$E_{av}$". Generally, Figure 7 functions such that for small error signals a long persistence of the signal is required before commencement of any adjustment signal, but for relatively large errors the adjustment is implemented relatively quickly. The error signal $E_{av}$ is supplied through a splitter and applied to each of a series of signal counter/samplers P, Q, R, and S as well as an immediate mode gate T. Counter/samplers P, Q, R and S sample the input signal every 200 msec and if the absolute value of a sample exceeds the threshold for that sampler, then its timer switches on and it starts to count towards its termination point respectively being 3.2 secs, 1.6 secs, 0.8 secs and 0.4 secs from the commencement point.

At each sampling time the sample averaged error signal value $E_{av}$ is utilised for any counter which is timing. When any one of the timers counts to its end point, the average E' of the sampled values of $E_{av}$ for that timer is determined in an averaging device Av. Conveniently, this is implemented in the form of a store which accumulates the sum of all the samples $E_{av}$ which divided by the total number of samples indicates the average value. The absolute value of the output from each averager Av. is applied to a threshold gate T.G., which simply resets the corresponding counter/sampler if the threshold thereof is not reached by the absolute average value. If the absolute average is equal to or greater than the threshold, then the threshold gate T.G. provides:

(i) an output in the form of a control signal E' applied to one of the respective input ports (a), (b), (c) and (d) of an OR gate to "enable" the gate to pass the error signal onto an adjustment controller; and

(ii) a reset signal to reset all the counter/samplers.

Furthermore, an immediate mode threshold T.G. for line T supplies a control signal directly to the OR gate if at any sampling point the absolute value of the sample averaged error signal $E_{av}$ is 4 cm or greater.

An Adjustment Controller stage reads the hydraulic control factor "k" (from the RAM of Figure 5) and produces an output signal being a pulse of a duration proportional to the magnitude of the averaged error signal E' and the control factor "k".

The output from the Adjustment Controller stage is applied to either a "raise" or "lower" output depending on whether E' is positive or negative and applied to an AND gate which reads a signal "m" representative of detected motion; if signal "m" is present, the output signal pulse is applied to the relevant solenoid of the hydraulic system.

In the event that the averaged error signal E' is less than 0.75 cm, then in this example no gating signal goes to the OR gate and no adjustment is made to the hydraulics of the implement.

The arrangement in Figure 7 may be used quite separately from the circuit configuration of Figure 5 or may be integrated into the design of that circuit.

**Claims**

1. An ultrasonic distance measuring apparatus for use on an agricultural machine, the apparatus comprising an ultrasonic transducer system (LL, L, CA, CB, R, RR) for directing an ultrasonic signal onto the soil and for receiving a reflected signal, signal processing means (P) for receiving an input signal ($R_x$) corresponding to the reflected signal and for providing an output signal representative of the height of the transducer above the soil surface, the signal processing means comprising

(a) means for sampling the input signal (Trigger Sampler);

(b) timing means (counter) for measuring the time elapsed from the initiation of the ultrasonic transmitted signal ($T_x$) and the sampling of said sampling means;

(c) means for storing (Stage A) first and second elapsed time values when the amplitude envelope of the input signal respectively:

(i) exceeds a threshold value, and

(ii) falls below a threshold value;

(d) analysing means (Stage A) for analysing the stored elapsed time values and determining a deemed reference time value between said elapsed time values representative of the transit time of the ultrasonic signal from transmittal to receipt substantially irrespective of the amplitude and shape of the amplitude envelope, whereby variations in this reference time value indicate variations in the machine tool height; and

(e) output means (Stage B, Stage C and either Stage D or Fig 7) for producing said output signal whereby adjustments required to the agricultural machine can be determined and/or effected.

2. Apparatus as claimed in Claim 1, and further comprising comparator means (Stage B) for comparing said output signal with a set value of desired effective height and producing an error signal, and means for providing (Stage C) an averaged error signal from a sample comprising a multiplicity of successive output signals.

3. An apparatus as claimed in Claim 2 and wherein the analysing means (Stage A Fig 2) establishes reference time values corresponding to a deemed peak in the amplitude envelope of the input signal.

4. An apparatus as claimed in Claim 2 wherein the analysing means (Stage A) calculates the reference time value as being a time along the time scale corresponding to one-third of the time approximately from the first elapsed time value to the second elapsed time value.

5. An apparatus as claimed in any one of the preceding claims having suppression means (Stage A) for suppressing a receiving circuit in the signal processing means to prevent the processing of any received signal until a time has elapsed corresponding to the minimum in which an ultrasonic signal could be reflected from the soil surface with the transducer at its minimum operational height.

6. An apparatus as claimed in any one of the preceding claims and wherein said timing means (counter) includes a received signal processing circuit including a comparator for comparing the received signal with a set threshold value and providing an output when and only when the received signal exceeds the threshold value, and a retriggerable monostable device ($M_2$) retriggerable at an interval approximately equal to the time for a few cycles of the received signal ($R_x$) and adpated to provide a rectangular pulse output representative of the envelope of the amplitude of the received signal above the threshold.

7. Apparatus as claimed in Claim 2, and including a microprocessor (P) providing said sampling means, said storing means, said analysing means and said output means, and the microprocessor also including trigger means for providing a trigger pulse ($T_x$) to cause transmittance of said ultrasonic signal onto the soil, and the apparatus further comprising an output control circuit connected to a monostable device ($M_1$) and to a transistor ($T_1$) which, when in use, is coupled to the transducer system for the purpose of stopping ringing of the transducer after the ultrasonic transmitted signal has been transmitted.

8. Apparatus as claimed in any one the preceding claims, and wherein said sampling means (Trigger Sampler) and said storing means (counter) have means for sampling and storing two successive peaks in the received signal, and the analysing means (Stage A) has means for analysing said two peaks in terms of their respective widths and having means for applying a predetermined test to use one or other of the peaks if they have a width exceeding a predetermined minimum or to use both peaks in computing a reference time value.

9. Apparatus as claimed in any one of the preceding claims and including processing means for processing the received signal with clipping (Fig 2-$A_3$ and $A_4$) of the amplitude envelope of the input signal.

10. Apparatus as claimed in any one of the preceding claims and including a multiplicity of transducers (LL, L, CA, CB, R, RR) in said transducer system with a multiplexing device (MUX) and wherein at least one of said transducers (CA or CB) is arranged as a centre sensor arrangement for a central portion of the agricultural machine, and the apparatus further comprising separate sampling means and storing means corresponding to the respective transducers, and said analysing means including means for providing a warning signal if any one of the transducers has an individual reference time value corresponding to an indicated averaged error signal significantly different from the average of said centre sensor arrangement.

11. Apparatus as claimed in any one of the preceding claims and including calibration means ($S_4$, P) adapted to be actuated when desired and intended to be operated with the agricultural machine set with its tools in a zero depth position, the agricultural machine in this calibration mode being adapted to store the averaged reference time values determined for each transducer in the system as a calibration value, whereby in normal operation differences from this value represent the distance of the tool from this zero depth position.

12. Apparatus as claimed in Claim 11 and including a multiplicity of ports adapted to be connected to respective transducers, the apparatus having calibration means adapted to be actuated in a calibration mode, and the apparatus having a multiplexer (MUX) for sequentially actuating the respective transducer ports, and a port control device being provided for sampling the received signals on each port during calibration and upon termination of calibration suppressing the address of the multiplexer to any ports from which received signals are not detected during the calibration mode.

13. Apparatus as claimed in any one of the preceding claims and including motion detection means (P) comprising means for detecting whether the received signal includes variance above a predetermined threshold level and then and only then enabling the output means.

14. Apparatus as claimed in Claim 1 and including a differential buffer (Fig 7) in the output means and operating (a) to suppress any output signal if the error signal is less than a predetermined value, (b) for a relatively small value of error signal equal to or greater than said predetermined value suppressing the output signal and only enabling the generation of a corresponding corrective output signal if a sufficiently great error persists for a relatively long predetermined period of time, and (c) for a larger value of error signal greater than a second predetermined value, supressing the output signal and only enabling the generation of a corresponding corrective output signal if a sufficiently great error signal persists, but persists for a period of time which is substantially shorter than said relatively long predetermined period of time.

15. Apparatus as claimed in in any one of the preceding claims and inclduing means for averaging (Stage C) the error signal from values derived at sampling points in time after either said predetermined value or said second predetermined value has been exceeded, means for comparing (Fig 7) said predetermined value or said second predetermined value as the case may be after respectively said relatively long or said relatively short period of time with said average error signal, and providing the corresponding corrective output signal only if the predetermined value or said second predetermined value is exceeded, any said corrective output signal operating to reset said differential buffer.

16. An apparatus as claimed in Claim 14 and further comprising means for causing an immediate corrective error signal if the error signal exceeds a further predetermined value.

17. Apparatus as claimed in Claim 2 and having means for processing (Fig 7) the average error signal according to the following conditions and providing a corrective control signal substantially corresponding to the averaged error signal:

(i) For an averaged error signal in a very small predetermined range from zero to a very small ceiling value, the control signal is not enabled;

(ii) For an averaged error signal exceeding said ceiling value, a sampler controlled by a counter samples at regular intervals the averaged error signal for a first predetermined time and averages its samples and generates the control signal after a relatively long counting period;

(iii) For a larger averaged error signal exceeding a threshold value substantially greater than said ceiling value, a sampler at regular intervals samples the averaged error signal for a second period of time shorter than said first period of time and averages said samples and generates the control signal after the end of said second period of time;

(iv) For a greater averaged error signal exceeding a higher threshold value than that applicable to condition (iii) above, a sampler at regular intervals samples the averaged error signal for a third period of time shorter than said second period of time and generates the control signal after the elapse of the third period of time;

(v) For an averaged error signal exceeding a further threshold value greater than the higher threshold value referred to in (iv) above, the control signal is immediately enabled;

(vi) The enabling of the control signal from any one of (ii), (iii), (iv) or (v) above resets all samplers; and

(vii) If at the end of the counting time corresponding to any one of said samplers the averaged error signal as sampled has an absolute value less than the threshold value corresponding to that sampler then that sampler alone is reset.

18. An ultrasonic distance measuring apparatus for use on an agricultural machine, the apparatus comprising

(i) an ultrasonic transducer system (LL, L, CA, CB, R, RR) for directing an ultrasonic signal $(T_x)$ onto the soil and for receiving a reflected signal $(R_x)$;

(ii) signal processing means (P) for receiving an input signal (Stage B, Stage C) corresponding to the reflected signal and for providing an output signal representative of the height of the transducer above the soil surface;

(iii) means for providing a sample averaged error signal from a number of readings in a sample representative of the averaged difference between the actual transducer height above the soil and the desired height, said error signal also being representative of the departure of a working tool on the agricultural machine from a desired height relative to the soil surface;

(iv) signal control means (Fig 7) for monitoring the change of the sample averaged error signal with time and for providing a controlled actuation signal for actuating a control system to adjust as required the agricultural machine to alter the height above the soil of the portion of the machine mounting the transducer;

(v) the signal control means comprising a plurality of electronic counter means corresponding to error signal ranges having respective threshold values and arranged to count time to respective termination points after being switched on;

(vi) each counter means for an error range which has a larger threshold than the next counter means in the series having a shorter termination point than the termination point of said next counter means;

(vii) each of the counter means being controlled for being:

(a) switched on when the sample averaged error signal at any sampling time is in the range to which that counter means corresponds and to count time to said termination point;

(b) reset if the control system for the agricultural machine is actuated; and

(c) a trigger for an actuation signal if the counter means reaches its termination point; and

(viii) the apparatus having means for processing said actuation signal from any of the counter means for providing said control actuation system for the control system of the agricultural machine, said control actuation signal corresponding to the magnitude of the error signal.

19. Apparatus as claimed in Claim 15, and for use in controlling a soil working machine and having means for establishing a dead band for error signals up to 0.75 cm, and said control means includes four counters arranged to operate substantially as follows:

| Error Thresholds | Persistence Times |
|---|---|
| 0.75 cm | 3.2 secs |
| 1.0 cm | 1.6 secs |
| 1.25 cm | 0.8 secs |
| 1.5 cm | 0.4 secs |

20. Apparatus as claimed in Claim 19, and further comprising immediate mode means for causing a corrective output signal to be provided if an averaged error signal exceeds a threshold value of approximately 4 cm.

21. Apparatus as claimed in Claim 2, and further comprising control means (Fig 7) for processing said averaged error signal, the control means comprising a plurality of electronic counter means (P, Q, R, S) corresponding to error signal ranges having respective threshold values and arranged to count time to respective termination points after being switched on; and wherein
(vi) each counter means for an error range which has a larger threshold than the next counter means in the series having a shorter termination point than the termination point of said next counter means;
(vii) each of the counter means being controlled for being:
(a) switched on when the sample averaged error signal at any sampling time is in the range to which that counter means corresponds and to count time to said termination point;
(b) reset if the control system for the agricultural machine is actuated; and
(c) a trigger for an actuation signal if the counter means reaches its termination point; and
(viii) the apparatus having means for processing said actuation signal form any of the counter means for providing said control actuation system for the control system of the agricultural machine, said control actuation signal corresponding to the magnitude of the error signal.

22. Apparatus as claimed in Claim 21, and including means associated with each of the counter means for responding to the value of the sample averaged error signal at each sampling point in time and for determining an average value thereof at the termination point for that counter means, whereby the controlled actuation signal has a corresponding value, and after a counter means has been switched on, it continues to count towards its termination point even if individual sample averaged error signals fall outside the range for switch-on of that counter means; if the particular counter means which has been switched on experiences a value above the threshold for the next higher counter means, then this next higher counter means is then switched on and if it reaches its termination point before the first counter means, then it is the next higher counter means which causes the production of the requisite controlled actuation signal and all counter means are reset.

23. Apparatus as claimed Claim 22 and wherein a threshold gate (T.G.) is applied to the control actuation signal of the respective counter means for causing a machine adjustment signal to be issued if the samples of the averaged error signal exceeds the threshold for that counter means, but otherwise to cause resetting of that counter means only.

24. Apparatus as claimed in Claim 18, and wherein said sampling means and said storing means have means for sampling and storing two successive peaks in the received signal, and the analysing means has means for analysing said two peaks in terms of their respective widths and having means for applying a predetermined test to use one or other of the peaks if they have a width exceeding a predetermined minimum or to use both peaks in computing a reference time value.

13

0260113

**FIG.1**

**FIG.2**

0260113

B

13
11
15
14
20°
12
23
16
FIG.3
17
19
A

44
A
FIG.4
42
42
42
40
42
42
41
43
41
41
41

0260113

FIG. 5

0260113

FIG. 6

0260113

FIG. 7